# EUROPEAN PATENT SPECIFICATION

(11) **EP 1 371 412 B1**
(45) Date of publication and mention of the grant of the patent: **10.08.2005**
(21) Application number: 03076686.9
(22) Date of filing: 02.06.2003
(51) Int. Cl.: B01J 19/00, G01N 33/543

(54) **Microarray system utilizing microtiter plates**
Mikroarraysystem unter Verwendung von Mikrotiterplatten
Système de microréseaux sur plaque de microtitration

(30) Priority: 13.06.2002 US 171169
(43) Date of publication of application: 17.12.2003
(73) Proprietor: EASTMAN KODAK COMPANY, Rochester, New York 14650 (US)
(72) Inventor: Kocher, Thomas E., c/o Eastman Kodak Co., Rochester, N.Y. 14650-2201 (US); Wojcik, Timothy J., c/o Eastman Kodak Co., Rochester, N.Y. 14650-2201 (US)
(74) Representative: Weber, Etienne Nicolas

(56) References cited:
- EP-A- 1 287 883
- WO-A-00/16101
- WO-A-00/47996
- US-A- 6 083 763
- US-B1- 6 232 066
- STEEMERS F. J. ET AL.: "Screening unlabeled DNA targets with randomly ordered fiber-optic gene arrays" NATURE BIOTECHNOLOGY, vol. 18, no. 1, January 2000 (2000-01), pages 91-94, XP002202592 ISSN: 1087-0156

## Description

This invention relates in general to a biological analysis system and more particularly to a biological analysis system which integrates microarray receivers with microtiter plates.

In recent years, high density arrays formed by spatially addressable bioactive probes on a receiver has greatly enhanced and simplified the process of biological research and development. More specifically, the molecular biology community has developed considerable infrastructure based on microtiter plate technology. Microtiter plates are devices that contain wells that enable molecular biological experiments by combining several chemistries confined in wells. An example of microtiter plates can be found with many manufacturers, including Whatman Philtronics as well as Corning, Inc., to name a few. Microtiter plates are available in many configurations including 96 wells, 192 wells, 384 wells, etc. Plates are available with round wells, square wells, and with filters in the bottom, for example. Since microtiter plate technology has been so widely adopted by the molecular biology community as well as the drug discovery and the drug development communities, a significant amount of robotics technology has been developed to automate the processes that use microtiter plates. In general, robotics are used to move plates from location to location as well as dispense liquids into the wells. Automation provides speed as well as consistency. Array-based ELISAs for High-Throughput Analysis of Human Cytokines, BioTechniques, Vol. 31, No. 1 (2201), 186-194, (Pierce Endogen) describes a technique where antibody solutions at 20 nL/spot were spotted in a 3 x 3 pattern in well plates. High-Throughput micorarray-based enzyme-Linked Immunosorbent Assay (ELISA), BioTechniques, Vol. 27, No. 4, (1999), 778-788, (Genometrix) demonstrates the potential to conduct multi-analyte assays using 96 well microarray-based ELISA format.

The Corning/Life Sciences web site has extensive information on products used in microtiter plate assay systems. Problems with this technology are the expense and complexity of equipment for forming the biosite arrays in the wells of the microtiter plates.

The following patents disclose alternative microarray techniques that do not adequately solve these problems. U.S. Patent 6,083,763, issued July 4, 2000, inventor Balch, discloses in Fig. 7, a thin film substrate having conductive patterns and biosites deposited thereon which are bonded to a reaction vessel having a matrix of open reaction chambers that are closed off by the thin film substrate. The biosites are disclosed as being deposited by ink-jet, capillary, or photolithiographic techniques. It is also disclosed to bond thin films of plastic or glass to conventional bottomless microtiter plates. Biosites are deposited either before or after the bottoms are bonded to the plate.

U.S. Patent 6,232,066, issued May 15, 2001, inventors Felder et al., discloses a multi-well assemblage including a well separator, a subdivider, and a base which are joined together. Biosite arrays are attached to the base.

U.S. Patent 6,309,828, issued October 30, 2001, inventors Schleifer et al., discloses a technique for applying an array of nucleic acid molecules on a substrate by a device including a synthesis unit in communication with a purification unit in communication with a printing unit. The synthesis, purification, and printing units, are aligned, bottomless microtiter plates.

WO 00 16101 A (Tufts College) is directed to a target analyte sensors utilizing microspheres.

According to the present invention, there is provided a solution to the problems discussed above.

According to a feature of the present invention, there is provided a biological analysis system comprising: a microarray receiver including a substrate coated with a composition including a population of biological probe modified micro-spheres immobilized in a coating containing a gelling agent or precursor to a gelling agent, at least a sub-population of said population of micro-spheres containing an optical bar code generated from a least one colorant associated with the micro-spheres and including a biological probe; and a microtiter plate having a plurality of wells open at first and second ends in liquid sealing contact with said microarray receiver at said first open ends, each of said wells adapted to receive a fluorescently/chemiluminescently labeled biological target sample which interacts fluorescently/chemiluminescently with said biological probe.

The invention has the following advantages.
1. A system is provided incorporating microtiter plates and microarray receivers which is simple and cost efficient.
2. The microarray receivers can be either patterned or random arrays of biological probes.
3. The receiver can be opaque or transparent to facilitate detection by reflection emission or transmission detection devices.

Fig. 1 is a partial elevational diagrammatic view illustrating an embodiment of the invention.
Fig. 2 is a perspective diagrammatic view illustrating the embodiment of Fig. 1.
Figs. 3A and 3B are diagrammatic views of microarray receivers showing respectively patterned and randomly distributed biologically active sites.
Fig. 4A - 4C are respective diagrammatic views of optical readout systems for use in conjunction with the present invention.
Fig. 5 is a diagrammatic view of a microarray receiver which can be used in the present invention.

In general, according to the present invention there is provided a biological analysis system including the combination of a microtiter plate having an array of open-ended wells and a microarray receiver having random or predetermined array of biologically functional sites which form a repetitive pattern on the receiver and which are in contact with the open ended wells. The microarray receiver is described in U.S. Patent application S.N. 09/942,241. A general description of the microarray receiver will now be given but reference is made to the latter patent application for a more complete description.

The microarray receiver according to the invention, includes a substrate coated with a composition comprising micro-spheres (beads) dispersed in a fluid containing a gelling agent or a precursor to a gelling agent, wherein the micro-spheres are immobilized in a random or ordered position on the substrate. The substrate is free of receptors designed to physically or chemically interact with the micro-spheres. One or more sub-populations of the population of microspheres contain a unique optical bar code generated from at least one colorant associated with the micro-spheres and including a unique biological functionality or probe which react with analytes with which they come in contact.

The distribution or pattern of micro-spheres on the substrate may be entirely random (a spatial distribution showing no reference or bias) or be attracted or held to sites that are pre-marked or predetermined on the substrate. Each micro-sphere in the array has a distinct signature based on color which may be derived from mixing three dyes representing the primary colors Red (R), Green (G), and Blue (B) to create thousands of distinguishable micro-spheres with distinct color addresses (unique RGB values, e.g., R=0, G=204, B=153). The micro-spheres are made with active sites on their surface to which are attached a specific bioactive probe. Therefore, each color address can correspond to a specific bioactive probe.

A microarray or population of micro-spheres can include a few or hundreds or more of sub-populations of micro-spheres, where each sub-population comprises the same color code and the same bio-active probe. Each microarray of micro-spheres occupies a sub-area of the substrate and is repeated in a pattern over the area of the substrate. The dimensional area of the microarray sub-area may be comparable to the dimensional area of a microtiter well or multiple wells may overlay a microarray sub-area.

The micro-spheres are preferably coated onto the substrate as disclosed in U.S. Patent Application S.N. 09/942,241.

In order to use a microarray having bioactive probes to analyze an unknown biological target sample, the sample to be analyzed has to be non-selectively labeled by using fluorescent dyes or chemiluminescent active molecules.

A biological target sample placed into a microtiter plate well comes into contact with the microarray bioactive probes. The fluorescently/chemiluminescently signals which result from the hybridization of the unknown biological target sample with bioactive probes on the surface of the coated micro-spheres are detected and analyzed by an electronic camera/image processor system.

Microtiter plates are available in many configurations including 96 wells, 192 wells, 384 wells, etc. Plates are available with round and square wells and with filters in the bottom.

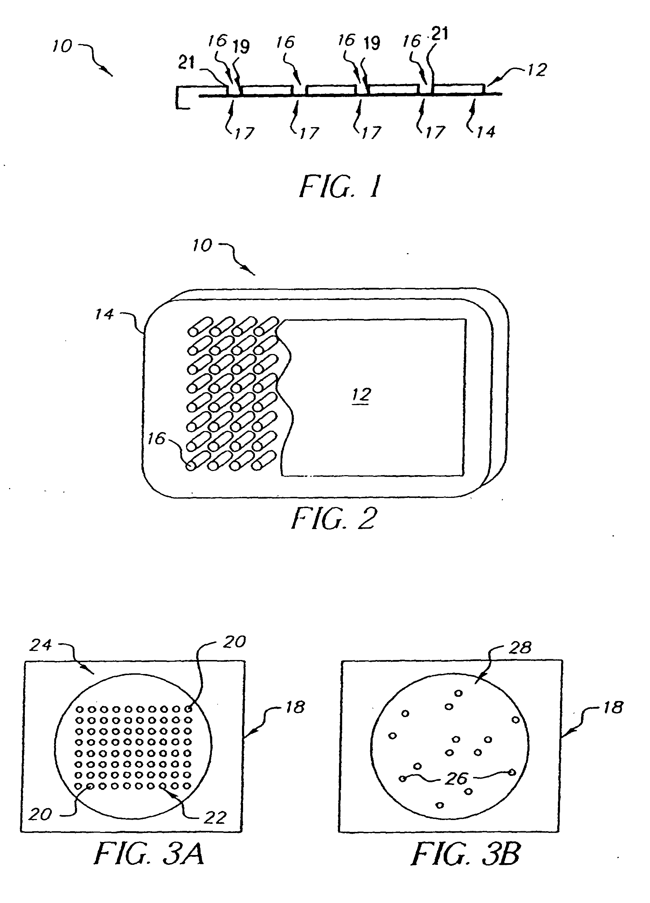

Referring now to Fig. 1, there is shown an embodiment of the present invention. As shown, biological analysis system **10** includes microtiter plate **12** with microarray receiver **14** integrated to the bottom of plate **12**. Plate **12** and receiver **14** are shown in partial cross section. Plate **12** includes open-ended wells **16** having openings at first and second ends **19, 21.** Microarray receiver **14** with areas of biological functionality **17** is in sealing contact with first ends **19** of wells **16.** Preferably microarray receiver **14** has had its biological function established either through ordered deposition or random coating techniques before being combined with plate **12**. In an alternative embodiment, the receiver is sealed to the bottom of plate **12** prior to providing biological functionality which is provided through wells **16** or plate **12** by well known techniques.

Fig. 2 shows the system **10** from the bottom. Microarray receiver **14** has been partially removed to display wells **16** in microtiter plate **12**. Receiver **14** normally extends over the entire bottom of plate **12** covering all wells **16.** In use, the wells **16** are filled with a sample biological target analyte.

Fig. 3A shows a region **18** of a microarray receiver showing sites **20** with biological functionality. The sites **20** are arranged in a predetermined patterned array **22**. Side wall **24** of a well is shown bounding site array **22**.

Fig. 3B shows a region **18** of a microarray receiver showing sites **26** with biological functionality. The sites **26** are arranged in a random array **28**. Side wall **24** of a well is shown bounding site array **28**.

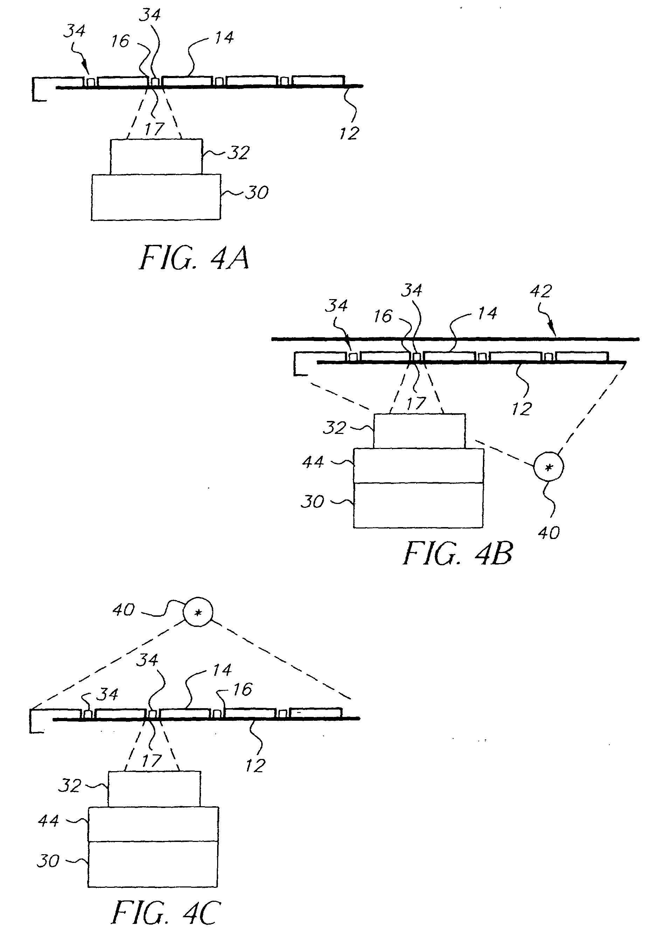

Referring now to Figs. 4A, 4B, 4C, there are shown optical readout systems for luminescence, reflection fluorescence and transmission fluorescence, respectively. As shown in Fig. 4A, the hybridization of a target analyte **34** in a well **16** of plate **12** with a biological probe **17** on microarray receiver **14** produces luminescence which is detected by CCD camera **30** with lens **32**.

As shown in Fig. 4B, a source of illumination **40** illuminates the backside of microarray receiver **14.** The hybridization of target analyte **34** with a biological probe **17** fluoresces and the emissions are reflected from reflector **42** to camera **30** with lens **32**. Filter **44** filters out the illuminant light while passing the fluorescent light.

As shown in Fig. 4C, a source of illumination **50** illuminates analytes **34** from the front side of plate **12** and receiver **14.** Since receiver **14** in this case is light transmissive, the fluorescent light emissions from the hybridization of analyte **34** with a biological probe **17** pass through receiver **14** to CCD camera **30** with lens **32** and filter **44**, which filters out the illuminant light but passes the fluorescent light.

It will be understood that the components used in the optical readout systems of Figs. 4A-4C can be other than those shown. For example, electronic or digital cameras with sensors other than CCD can be used. In addition, the positioning of the camera can result in more complex optical systems than those shown.

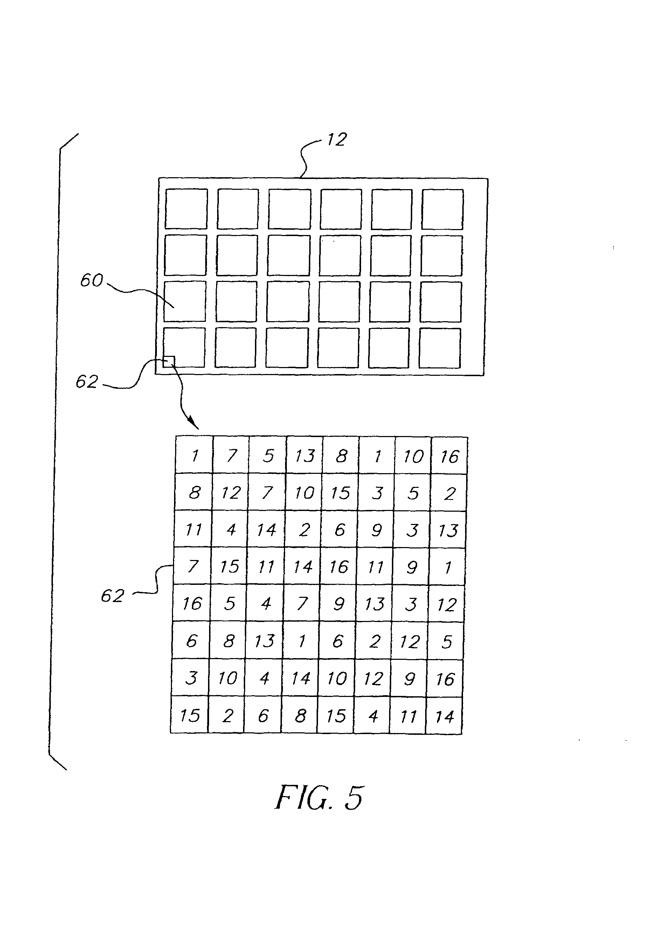

Fig. 5 illustrates a microarray receiver that can be used in the present invention. As shown, microarray receiver **14** includes a pattern of **24** regions **60** in a matrix of 4 rows and 6 columns. Each region includes an identical microarray of randomly distributed biological probe sites, a portion of which are shown in the exploded view. In this view, 16 different biological probes attached to micro-spheres are randomly distributed throughout the portion **62** of region **60**. According to the invention, each probe is attached to a micro-sphere of a color unique to that probe so that micro-spheres of 16 different colors are present in portion 16. If, for example, an analyte containing each of the 16 complimentary targets to the 16 probes is brought into contact with portion **62**, the hybridization between the 16 targets with the 16 probes would produce luminescence or fluorescence of 16 different colors which are detected by an appropriate optical system (Figs. 4A-4C).

## Claims

1. A biological analysis system comprising:
a microarray receiver including a substrate coated with a composition including a population of biological probe modified micro-spheres immobilized in a coating containing a gelling agent or precursor to a gelling agent, at least a sub-population of said population of micro-spheres containing an optical bar code generated from a least one colorant associated with the micro-spheres and including a biological probe; and
a microtiter plate having a plurality of wells open at first and second ends in liquid sealing contact with said microarray receiver at said first open ends, each of said wells adapted to receive a fluorescently/chemiluminescently labeled biological target sample which interacts fluorescently/chemiluminescently with said biological probe.

2. The system of claim 1 wherein said microarray receiver substrate is coated with a composition including a population of biological probe modified micro-spheres immobilized in a coating containing a gelling agent or precursor to a gelling agent, said population including a plurality of sub-populations of micro-spheres, each of which contains a unique bar code generated from at least one colorant associated with said micro-spheres and including a unique biological probe.

3. The system of claim 1 wherein said microarray receiver includes a pattern of regions, each of which includes an identical population of said micro-spheres.

4. The system of claim 3 wherein said population of microspheres in each of said regions includes a plurality of sub-populations of microspheres, each of which contains a unique bar code generated from at least one colorant associated with said micro-spheres and including a unique biological probe.

5. The system of claim 3 wherein at least one microtiter well is in contact with each region of said pattern of regions.

6. The system of claim 3 wherein two or more microtiter wells are in contact with each region of said pattern of regions.

7. The system of claim 1 wherein said optical barcode is generated by two or more colorants.

8. The system of claim 1 wherein said optical barcode is generated by a mixture of red (R), green (G), and blue (B) colorants.

## Patentansprüche

1. Biologisches Analysesystem mit:
einem Mikroarray-Empfangselement, das ein Substrat umfasst, auf dem eine Zusammensetzung aus einer Population biologisch probenmodifizierter Mikrokugeln aufgetragen ist, immobilisiert in einer Beschichtung, die ein Geliermittel oder einen Vorläufer eines Geliermittels enthält, mindestens eine Unterpopulation dieser Population aus Mikrokugeln, die einen optischen Strichcode enthalten, hergestellt aus mindestens einem, den Mikrokugeln zugeordneten Farbmittel, und mit einer biologischen Probe; und
einer Mikrotiterplatte mit einer Vielzahl von Wells, die an ersten und zweiten Enden offen sind und in Flüssigkeitsverschlusskontakt mit einem Mikroarray-Empfangselement an den ersten offenen Enden stehen, wobei jedes Well zur Aufnahme einer fluoreszent/chemilumineszent gekennzeichneten biologischen Targetprobe ausgelegt ist, die fluoreszent/chemilumineszent mit der biologischen Probe zusammen wirkt.

2. Biologisches Analysesystem nach Anspruch 1, worin das Mikroarray-Empfangssubstrat mit einer Zusammensetzung beschichtet ist, die eine Population biologisch probenmodifizierter Mikrokugeln enthält, immobilisiert in einer Beschichtung aus einem Geliermittel oder einem Vorläufer eines Geliermittels, wobei die Population eine Vielzahl von Unterpopulationen aus Mikrokugeln enthält, die jeweils einen eindeutigen Strichcode umfassen, hergestellt aus mindestens einem Farbmittel, das den Mikrokugeln zugeordnet ist, und mit einer eindeutigen biologischen Probe.

3. Biologisches Analysesystem nach Anspruch 1, worin das Mikroarray-Empfangselement ein Muster aus Bereichen umfasst, von denen jeder eine identische Population der Mikrokugeln enthält.

4. Biologisches Analysesystem nach Anspruch 3, worin die Mikrokugeln in jedem Bereich eine Vielzahl aus Unterpopulationen von Mikrokugeln enthalten, von denen jede einen eindeutigen Strichcode beinhaltet, der aus mindestens einem den Mikrokugeln zugeordneten Farbmittel hergestellt ist, und mit einer eindeutigen biologischen Probe.

5. Biologisches Analysesystem nach Anspruch 3, worin mindestens ein Mikrotiter-Well in Kontakt mit jedem Bereich der Musters aus Bereichen steht.

6. Biologisches Analysesystem nach Anspruch 3, worin zwei oder mehr Mikrotiter-Wells in Kontakt mit jedem Bereich der Musters aus Bereichen stehen.

7. Biologisches Analysesystem nach Anspruch 1, worin der optische Strichcode durch zwei oder mehr Farbmittel erzeugt wird.

8. Biologisches Analysesystem nach Anspruch 1, worin der optische Strichcode durch eine Mischung aus roten (R), grünen (G) und blauen (B) Farbstoffen erzeugt wird.

## Revendications

1. Système d'analyse biologique comprenant :
un récepteur à microréseau comprenant un substrat revêtu d'une composition comprenant une population de microsphères modifiées par une sonde biologique immobilisées dans un revêtement contenant un agent gélifiant ou un précurseur d'un agent gélifiant, au moins une sous-population de ladite population de microsphères contenant un code à barres optique généré à partir d'au moins un colorant associé aux microsphères et comprenant une sonde biologique, et
une plaque de microtitrage comportant une pluralité de cupules ouvertes à des premières et secondes extrémités en contact à étanchéité liquide avec ledit récepteur à microréseau auxdites premières extrémités ouvertes, chacune desdites cupules étant conçue pour recevoir un échantillon cible biologique marqué par fluorescence/chimioluminescence qui interagit par fluorescence/chimioluminescence, avec ladite sonde biologique.

2. Système selon la revendication 1, dans lequel ledit substrat de récepteur à microréseau est revêtu d'une composition comprenant une pluralité de microsphères modifiées par une sonde biologique immobilisées dans un revêtement contenant un agent gélifiant ou un précurseur d'un agent gélifiant, ladite population comprenant une pluralité de sous-populations de microsphères, dont chacune contient un code à barres unique généré à partir d'au moins un colorant associé auxdites microsphères et comprenant une sonde biologique unique.

3. Système selon la revendication 1, dans lequel ledit récepteur à microréseau comprend une séquence de régions, dont chacune comprend une population identique desdites microsphères.

4. Système selon la revendication 3, dans lequel ladite population de microsphères dans chacune desdites régions comprend une pluralité de sous-populations de microsphères, dont chacune contient un code à barres unique généré à partir d'au moins un colorant associé auxdites microsphères et comprenant une sonde biologique unique.

5. Système selon la revendication 3, dans lequel au moins une cupule de microtitrage est en contact avec chaque région de ladite séquence de régions.

6. Système selon la revendication 3, dans lequel deux cupules de microtitrage ou plus sont en contact avec chaque région de ladite séquence de régions.

7. Système selon la revendication 1, dans lequel ledit code à barres optique est généré par deux colorants ou plus.

8. Système selon la revendication 1, dans lequel ledit code à barres optique est généré par un mélange de colorants rouge (R), vert (G) et bleu (B).
